(19) **Europäisches Patentamt**
**European Patent Office**
**Office européen des brevets**

(11) **EP 4 365 973 A1**

(12) **EUROPEAN PATENT APPLICATION**
published in accordance with Art. 153(4) EPC

(43) Date of publication:
**08.05.2024 Bulletin 2024/19**

(21) Application number: **22861747.8**

(22) Date of filing: **26.08.2022**

(51) International Patent Classification (IPC):
*H01M 4/13* (2010.01)    *H01M 4/133* (2010.01)
*H01M 10/0525* (2010.01)    *H01M 4/02* (2006.01)

(52) Cooperative Patent Classification (CPC):
**H01M 4/02; H01M 4/13; H01M 4/133;**
**H01M 10/0525;** Y02E 60/10

(86) International application number:
**PCT/KR2022/012778**

(87) International publication number:
**WO 2023/027539 (02.03.2023 Gazette 2023/09)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **26.08.2021   KR 20210113140**
**25.08.2022   KR 20220107196**

(71) Applicant: **LG Energy Solution, Ltd.**
**Seoul 07335 (KR)**

(72) Inventors:
• **KIM, Soo Hyun**
  **Daejeon 34122 (KR)**
• **YOON, Sung Pil**
  **Daejeon 34122 (KR)**

(74) Representative: **Plasseraud IP**
**66, rue de la Chaussée d'Antin**
**75440 Paris Cedex 09 (FR)**

(54) **ELECTRODE AND METHOD FOR MANUFACTURING ELECTRODE**

(57)    The present application may provide an electrode capable of improving impregnability of an electrolyte, thereby improving performance in a range without impairing safety of a battery, capable of improving performance, such as a longer battery life, by adjusting a width and a depth of an intaglio shape, and capable of increasing a surface area to an intaglio shape having an appropriate width to improve impregnability of an electrolyte, and decreasing the thickness of the electrode to reduce the resistance of the electrode, and a method for manufacturing the same.

[Figure 1]

## Description

## Technical Field

Cross-Reference with Related Applications

This application claims the benefit of priority based on Korean Patent Application No. 10-2021-0113140 on August 26, 2021, and claims the benefit of priority based on Korean Patent Application No. 10-2022-0107196 on August 25, 2022, the disclosures of which are incorporated herein by reference in their entirety.

Technical Field

The present application relates to an electrode having an intaglio shape, and a method for manufacturing the electrode having an intaglio shape.

## Background Art

As technology development and demand for mobile devices and electric vehicles increase, the demand for secondary batteries as the energy source increases, and accordingly, many studies are in progress so as to enable to meet various needs. As the secondary battery, there are a nickel hydrogen battery, a lithium battery, and a lithium-ion battery, where the lithium-ion battery is representative.

In general, the secondary battery comprises an electrode assembly in which a positive electrode and a negative electrode to which a positive electrode active material and a negative electrode active material are applied, respectively, are disposed with a separator (separation membrane) interposed therebetween, and an exterior material for sealing and accommodating the electrode assembly together with an electrolyte.

Here, the electrolyte is a medium for ion movement, which permeates between the positive electrode, the negative electrode, and the separator by capillary force, if the electrolyte is injected into the electrode assembly. At this time, if the electrolyte is incompletely impregnated between the positive electrode, the negative electrode, and the separator, the reaction between the electrodes is not smooth, whereby the resistance increases and the power characteristics and the battery capacity is rapidly lowered, and thus deterioration of battery performance and shortening of lifespan may occur, as well as battery deterioration or an explosion phenomenon may occur due to high resistance expression.

In particular, in order to improve energy storage capability of a secondary battery, a high loading technology of changing the composition of an active material or increasing the amount of an active material is applied recently, but when such a high loading technology is applied, the battery performance is not properly expressed due to the incomplete impregnation of the electrolyte.

In addition, in order to secure safety and battery performance in a lithium-ion battery, the negative electrode has a larger area than the positive electrode, and the discharge capacity of the active material per unit area is increased. Here, in the case of the negative electrode in which intaglios are formed, the amount of the negative electrode active material facing the negative electrode portion decreases, whereby there is a possibility that the discharge capacity per unit area is reversed. In this case, since the ratio (a so-called NP ratio) of the capacities of the negative electrode and the positive electrode per unit area decreases, there is a problem that the lithium metal is precipitated.

In contrast, Patent Document 1 comprises a current collector and an active material layer, which is characterized in that the active material layer is provided with a pattern having a plurality of line shapes formed at a predetermined depth from the surface and formed side by side spaced apart from each other, and a ratio (depth of the pattern/width of the pattern) of the depth to the width of the pattern is 0.2 to 1.0, thereby improving the electrolyte impregnation property. However, when the ratio of the depth to the width of the pattern is within the above range, there is a problem that the charging time increases.

[Prior Art Documents]

(Patent Document 1) KR Laid-Open Patent Publication No. 10-2016-0116969

## Disclosure

## Technical Problem

The present application may provide an electrode capable of improving impregnability of an electrolyte, thereby improving performance in a range without impairing safety of a battery, and a method for manufacturing the same.

Also, the present application may provide an electrode capable of improving performance, such as a longer battery life, by adjusting a width and a depth of an intaglio shape, and a method for manufacturing the same.

In addition, the present application may provide an electrode capable of increasing a surface area to an intaglio shape having an appropriate width to improve impregnability of an electrolyte, and decreasing the thickness of the electrode to reduce the resistance of the electrode, and a method for manufacturing the same.

**Technical Solution**

Among the physical properties mentioned in the present application, the physical property in which the measurement temperature and/or the measurement pressure affects the results is the results measured under room temperature and/or normal pressure conditions, unless otherwise specified. In addition, among the physical properties mentioned in the present application, the physical property in which the measurement humidity affects the results is the results measured under normal humidity conditions, unless otherwise specified.

The term room temperature, as used in the present application, means a natural temperature without warming or cooling. For example, the room temperature may be any one temperature within the range of 10 °C to 30 °C, and may mean a temperature of about 23 °C or about 25 °C. In addition, the unit of temperature used in the present application is Celsius (°C), unless otherwise specified.

The term normal pressure, as used in the present application, means a natural pressure without pressurization or depressurization. For example, the normal pressure may mean about 1 atm or so in a level of the atmospheric pressure.

The term normal humidity, as used in the present application, means natural humidity without being particularly controlled at the room temperature and/or normal pressure state. For example, the normal humidity may mean humidity within the range of about 20 RH% to 80 RH%, or 40 RH% to 60 RH% or so at the room temperature and/or normal pressure state, where the used unit RH% (relative humidity%) indicates the current amount of water vapor as a percentage when the maximum amount of water vapor that can enter at a specific temperature is 100.

Unless otherwise specified, the thickness for any layer used in the present application may mean a value thereof if it is constant in the measurement range, and may mean an average thickness if it is not constant in the measurement range.

The $\pi$ used in the present application means the circumference ratio, which can be calculated by approximating it to 3.1415.

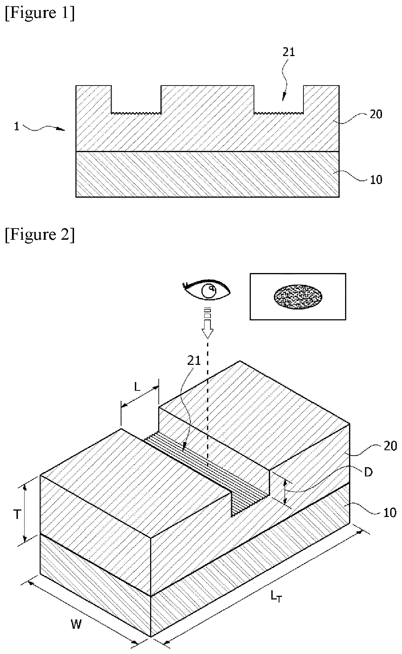

Figure 1 is a diagram showing an electrode (1) according to one example of the present application. The electrode (1) according to an example of the present application may comprise a current collector (10) and an active material layer (20) formed on at least one side of the current collector (10).

In the electrode (1) according to one example of the present application, the active material layer (20) may also be formed only on one side of the current collector (10), and in another example, the active material layer (20) may also be formed on both sides of the current collector (10).

The current collector (10) of the electrode (1) according to one example of the present application may be a positive electrode current collector or a negative electrode current collector.

As long as the positive electrode current collector has a conductivity without causing chemical changes in a secondary battery, its type, size and shape, and the like are not particularly limited. As the positive electrode current collector, for example, stainless steel, aluminum, nickel, titanium, baked carbon, or one that a surface of aluminum or stainless steel is surface-treated with carbon, nickel, titanium, silver, or the like may be used. By forming fine irregularities on the surface of the current collector for the positive electrode, the adhesion force of the positive electrode active material may also be increased, and various forms such as a film, a sheet, a foil, a net, a porous body, a foam, and a nonwoven body are possible. In addition, the current collector for the positive electrode may have a thickness of 3 $\mu$m to 500 $\mu$m.

As long as the negative electrode current collector has a conductivity without causing chemical changes in a secondary battery, its type, size and shape, and the like are not particularly limited. As the negative electrode current collector, for example, copper, stainless steel, aluminum, nickel, titanium, baked carbon, or one that a surface of copper or stainless steel is surface-treated with carbon, nickel, titanium, silver, and the like, or an aluminum-cadmium alloy, and the like may be used. In addition, like the positive electrode current collector, the binding force of the negative electrode active material may be strengthened by forming fine irregularities on the surface, and may be used in various forms such as a film, a sheet, a foil, a net, a porous body, a foam, and a non-woven body. The current collector for the negative electrode may have a thickness of 3 $\mu$m to 500 $\mu$m.

The active material layer (20) of the electrode (1) according to one example of the present application may be a positive active material layer or a negative active material layer. The active material layer (20) may comprise an electrode active material and a binder. The active material layer (20) may be a layer in which a slurry for forming an active material layer is applied on the current collector (10), or a layer in which the solvent is removed by drying, or may mean a layer formed through a rolling process after drying.

A specific type of the electrode active material included in the active material layer (20) is not particularly limited, and a material forming a positive electrode or a negative electrode may be generally used.

For example, when the active material layer (20) is a positive electrode active material layer, the electrode active material is not particularly limited, but may be exemplified by, for example, a layered compound such as lithium cobalt oxide ($LiCoO_2$) or lithium nickel oxide ($LiNiO_2$), or a compound substituted with one or more transition metals; a lithium iron oxide such as $LiFe_3O_4$; a lithium manganese oxide such as a formula $Li_{1+c1}Mn_{2-c1}O4$ ($0{\leq}c1{\leq}0.33$), $LiMnO_3$, $LiMn_2O_3$ or $LiMnO_2$; lithium copper oxide ($Li_2CuO_2$); a vanadium oxide such as $LiVsOs$, $V_2O_5$, or $Cu_2V_2O_7$; an Ni-site lithium nickel oxide represented by a formula $LiNi_{1-c2}Mc_2O_2$ (where M is at least one selected from the group consisting of Co, Mn, Al, Cu, Fe, Mg, B and Ga, with satisfying $0.01{\leq}c2{\leq}0.3$); a lithium manganese composite oxide represented by a formula $LiMn_{2-c3}M_{c3}O_2$ (where M is at least one selected from the group consisting of Co, Ni, Fe, Cr, Zn, and Ta, with satisfying $0.01{\leq}c3{\leq}0.1$) or $Li_2Mn_3MO_8$ (where M is at least one selected from the group consisting of Fe, Co, Ni, Cu and Zn); a lithium nickel cobalt manganese (NCM) composite oxide, a lithium nickel cobalt manganese aluminum (NCMA) composite oxide, and $LiMn_2O_4$ in which a part of Li of the formula is substituted with alkaline earth metal ions, and the like, without being limited thereto.

When the active material layer (20) is a negative electrode active material layer, as the electrode active material, for example, a compound capable of reversible intercalation and deintercalation of lithium may be used. A specific example may include a carbonaceous material such as graphite (artificial graphite, natural graphite, or graphitized carbon fiber) or amorphous carbon; a metallic compound capable of alloying with lithium, such as Si, Al, Sn, Pb, Zn, Bi, In, Mg, Ga, Cd, an Si alloy, an Sn alloy, or an Al alloy; a metal oxide capable of doping and dedoping lithium, such as $SiO_{\beta}$ ($0 < \beta < 2$), $SnO_2$, vanadium oxide, or lithium vanadium oxide; or a composite comprising the metallic compound and the carbonaceous material such as a Si-C composite or a Sn-C composite, and the like, and any one or a mixture of two or more thereof may be used. In addition, a metal lithium thin film may also be used as the negative active material. As the carbon material, low crystalline carbon and high crystalline carbon, and the like may be used. As the low crystalline carbon, soft carbon and hard carbon are representative, and as the high crystalline carbon, high-temperature carbon such as amorphous, plate-like, scale-like, spherical or fibrous natural graphite or artificial graphite, Kish graphite, pyrolytic carbon, mesophase pitch based carbon fiber, mesocarbon microbeads, mesophase pitches, and petroleum and coal tar pitch derived cokes are representative.

It is preferable from the viewpoint of capacity that the electrode active material comprises graphite (artificial graphite, natural graphite, or a combination thereof, etc.), and the active material layer (20) may be a negative electrode active material layer from the viewpoint of safety.

The weight percentage of the electrode active material in the active material layer may be about 80 wt% or more, 81 wt% or more, 82 wt% or more, 83 wt% or more, 84 wt% or more, 85 wt% or more, 86 wt% or more, 87 wt% or more, or 88 wt% or more, or may be 99 wt% or less, or 98 wt% or less, relative to the total weight.

A specific type of the binder included in the active material layer (20) is not particularly limited, and a material that serves to improve attachment between the electrode active materials and the adhesion force between the electrode active material and the current collector may be used.

An example of the binder is not particularly limited, and for example, one or more selected from the group consisting of polyvinylidene fluoride (PVDF), polyvinyl alcohol, styrene-butadiene rubber (SBR), polyethylene oxide, carboxyl methyl cellulose (CMC), cellulose acetate, cellulose acetate butylate, cellulose acetate propionate, cyanoethylpullulan, cyanoethyl polyvinylalcohol, cyanoethyl cellulose, cyanoethyl sucrose, pullulan, polymethylmethacrylate, polybutylacrylate, polyacrylonitrile, polyvinylpyrrolidone, polyvinylacetate, an ethylene vinyl acetate copolymer (ethylene-co-vinyl acetate), polyarylate, and a low molecular weight compound with a molecular weight 10,000g/mol or less may be used.

The binder may be included, in terms of improving adhesion force with the above-described electrode active material layer and securing the desired viscosity, in an amount of 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, or 1 part by weight or more, or may be included in an amount of 10 parts by weight or less, 9.5 parts by weight or less, 9 parts by weight or less, 8.5 parts by weight or less, 8 parts by weight or less or less, 7.5 parts by weight or less, 7 parts by weight or less, 6.5 parts by weight or less, 6 parts by weight or less, 5.5 parts by weight or less, 5 parts by weight or less, 4.5 parts by weight or less, 4 parts by weight or less, 3.5 parts by weight or less, 3 parts by weight or less, 2.5 parts by weight or less, or 2 parts by weight or less, relative to 100 parts by weight of the electrode active material.

In addition, it may be advantageous to use a binder having a solubility parameter in a range to be described below in order to form a suitable network region between components in the active material layer (20).

From the viewpoint of improving the impregnability of the electrolyte, as the binder, it may be necessary to use a binder having a solubility parameter of about 10 to 30 $MPa^{1/2}$. In another example, the solubility parameter may be 11 $MPa^{1/2}$ or more, 12 $MPa^{1/2}$ or more, 13 $MPa^{1/2}$ or more, 14 $MPa^{1/2}$ or more, 15 $MPa^{1/2}$ or more, or 16 $MPa^{1/2}$ or more, or may be 28 MPa$^{1/2}$ or less, 26 MPa$^{1/2}$ or less, 24 MPa$^{1/2}$ or less, 22 MPa$^{1/2}$ or less, 20 MPa$^{1/2}$ or less, or 18 MPa$^{1/2}$ or less. Such a solubility parameter of the binder is a value known as a so-called Hansen solubility parameter, which can be confirmed through the literature (e.g., Yanlong Luo et al., 2017, J. Phys. Chem. C 2017, 121, 10163-10173, DOI: 10.1021/acs.jpcc.7b01583, etc.). For example, from the types of binder as mentioned above, a type having the above solubility parameter may be selected.

The active material layer (20) may further comprise a conductive material. The conductive material is not particularly limited as long as it has a conductivity without causing a chemical change in the battery. For example, graphite such as natural graphite or artificial graphite; carbon black, such as carbon black, acetylene black, Ketjen black, channel black, furnace black, lamp black, or thermal black; conductive fibers such as carbon fibers or metal fibers; conductive tubes such as carbon nanotubes (CNTs); metal powders such as fluorocarbon, aluminum, or nickel powders; conductive whiskers such as zinc oxide or potassium titanate; conductive metal oxides such as titanium oxide; conductive materials such as polyphenylene derivatives may be used.

The conductive material may be included in an amount of 0.1 parts by weight to 5 parts by weight, or 0.5 parts by weight to 2 parts by weight relative to 100 parts by weight of the electrode active material, but is not limited thereto. A method of determining the content of the conductive material to an appropriate level in consideration of the cycle life of the battery and the like is known.

The thickness of the active material layer (20) may be 50 $\mu$m to 200 $\mu$m. Particularly, even when a high loading technology recently applied to improve the energy storage capability of a secondary battery is used, the electrode (1) according to one example of the present application can secure excellent battery performance by improving impregnability of the electrolyte by the intaglio shape (21) to be described below.

An intaglio shape (21) may be present in the active material layer (20) of the electrode (1) according to one example of the present application. The intaglio shape (21) may be formed to a predetermined depth from the surface of the active material layer (20).

The ratio (Vp/V) of the volume (Vp) of the intaglio shape (21) to the volume (V) of the active material layer (20) in the electrode (1) according to one example of the present application (Vp/V) may satisfy Equation 1 below.

[Equation 1]

$$a \leq Vp/V \times 100 \leq b$$

In Equation 1, Vp is the volume of the intaglio shape, and V is the volume of the active material layer. Also, a may be 0.1, 0.11, 0.12, 0.13, 0.14, 0.15, 0.16, 0.17, 0.18, 0.19 or 0.2, and b may be 0.6, 0.59, 0.58, 0.57, 0.56, 0.55, 0.54, 0.53, 0.52, 0.51 or 0.5.

When the ratio (Vp/V) of the volume (Vp) of the intaglio shape (21) to the volume (V) of the active material layer (20) in the electrode (1) according to an example of the present application satisfies Equation 1, it is possible to improve the impregnability of the electrolyte to the active material layer (20), thereby being capable of the performance improvement such as life increase and resistance reduction of the battery.

In addition, as the ratio (Vp/V) of the volume (Vp) of the intaglio shape (21) to the volume (V) of the active material layer (20) in the electrode (1) according to one example of the present application satisfies Equation 1, an impregnation rate (V), an impregnation size ($S_p$), and an impregnation time ($t_p$) according to Equation 2 to be described below may reach levels that the purpose of the present application is achieved. Furthermore, when the intaglio shape is an elliptical shape, the ratio ($L_{maj}/L_{min}$) of the major axis ($L_{maj}$) to the minor axis ($L_{min}$) may reach a level that the purpose of the present application is achieved.

Figure 2 is a perspective diagram of an electrode (1) according to one example of the present application. The active material layer (20) may be formed on at least one side of the current collector (10) and may be in the form of a cuboid with a breadth $L_T$, a width W, and a thickness T. At this time, the volume (V) of the active material layer (20) is $L_T \times W \times T$. In addition, an intaglio shape (21) in the form of an intaglio cuboid with a breadth L, a width W, and a depth D may be formed on the active material layer (20). At this time, the volume (Vp) of the intaglio shape (21) is $L \times W \times D$. The method of measuring the ratio of the volume (Vp) of the intaglio shape (21) to the volume (V) of the active material layer (20) through Figure 2 has been presented as one example, but is not limited thereto, and even if it is not in the form of the cuboid, the ratio of Vp/V may be measured through a volume measurement method or a volume measurement program generally used in the art. The volume (V) of the active material layer (20) may include the volume (Vp) of the intaglio shape (21).

The breadth (L) of the intaglio shape (21) formed on the electrode (1) according to one example of the present application may be 100 $\mu$m or more. Also, in another example, the breadth (L) of the intaglio shape (21) may be 150 $\mu$m or more, 200 $\mu$m or more, 250 $\mu$m or more, 300 $\mu$m or more, 350 $\mu$m or more, 400 $\mu$m or more, 450 $\mu$m or more,

or 500 $\mu$m or more. In addition, in another example, the upper limit of the breadth (L) of the intaglio shape (21) is not particularly limited, but for example, may be 2,000 $\mu$m or less, 1,800 $\mu$m or less, 1,600 $\mu$m or less, 1,400 $\mu$m or less, or 1,200 $\mu$m or less. Furthermore, in another example, the breadth (L) of the intaglio shape (21) may be within a range formed by appropriately selecting the upper and lower limits described above.

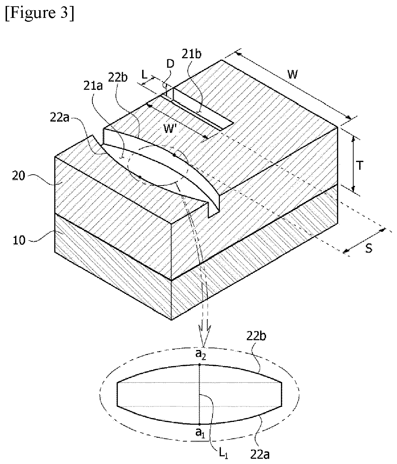

In addition, the term breadth (L) of the intaglio shape (21), as used in the present application, may mean an average distance of the shortest distances between both ends of two lines formed on the surface of the active material layer (20). For example, referring to the intaglio shape (21a) of Figure 3, two lines (22a and 22b) are formed on the surface of the active material layer (20), where the average distance of the shortest distances between the two lines (22a and 22b) may be the breadth (L) of the intaglio shape (21a). Here, the shortest distance between both ends of the two lines may mean the distance ($L_1$) between an arbitrary point (a1) of one line (22a) and an arbitrary point (a2), which is at the shortest distance therefrom, of the other line (22b). That is, the average value of the shortest distances between both ends of the two lines formed on the surface of the active material layer (20) in the width direction of the intaglio shape (21) may be the breadth (L) of the intaglio shape (21).

When the breadth (L) of the intaglio shape (21) formed on the electrode (1) according to one example of the present application is in the range of 100 to 800 $\mu$m, the ratio (D/L) of the depth (D) to the breadth (L) of the intaglio shape (21) may be 0.005 or more, 0.075 or more, 0.01 or more, 0.0125 or more, 0.015 or more, 0.0175 or more, or 0.02 or more, and in another example, the ratio (D/L) of the depth (D) to the breadth (L) of the intaglio shape (21) may be 0.15 or less, 0.14 or less, 0.13 or less, 0.12 or less, 0.11 or less, or 0.1 or less. The ratio (D/L) of the depth (D) to the breadth (L) of the intaglio shape (21) may be within a range formed by appropriately selecting the upper and lower limits as described above. Also, in another example, the breadth (L) of the intaglio shape (21) may be within the range of 150 to 750 $\mu$m, within the range of 200 to 700 $\mu$m, within the range of 250 to 650 $\mu$m, within the range of 300 to 600 $\mu$m or within the range of 350 to 550 $\mu$m. When the ratio (D/L) of the depth (D) to the breadth (L) of the intaglio shape (21) in the breadth (L) range of the intaglio shape (21) satisfies the above range, it is possible to improve the battery performance, such as lifespan increase, while preventing precipitation of lithium.

The term depth, as used in the present application, may mean a value thereof if it is constant in the measurement range, and may mean a depth at the deepest point from the surface if it is not constant in the measurement range.

When the breadth (L) of the intaglio shape (21) formed on the electrode (1) according to one example of the present application exceeds 800 $\mu$m, the ratio (D/L) of the depth (D) to the breadth (L) of the intaglio shape (21) may be 0.005 or more, 0.0055 or more, 0.006 or more, 0.0065 or more, 0.007 or more, 0.0075 or more, 0.008 or more, 0.0085 or more, 0.009 or more, or 0.0095 or more, and in another example, the ratio (D/L) of the depth (D) to the breadth (L) of the intaglio shape (21) may be in the range of 0.025 or less, 0.0225 or less, 0.02 or less, 0.0175 or less, 0.015 or less, or 0.0125 or less. The ratio (D/L) of the depth (D) to the breadth (L) of the intaglio shape (21) may be within a range formed by appropriately selecting the upper and lower limits as described above. Also, in another example, the breadth (L) of the intaglio shape (21) is in the range of 850 to 2,000 $\mu$m, in the range of 900 to 1,900 $\mu$m, in the range of 925 to 1800 $\mu$m, in the range of 950 to 1,700 $\mu$m, or in the range of 975 to 1,500 $\mu$m. When the ratio (D/L) of the depth (D) to the breadth (L) of the intaglio shape (21) in the breadth (L) range of the intaglio shape (21) satisfies the above range, it is possible to improve battery performance such as lifespan increase while preventing precipitation of lithium.

The intaglio shape (21) formed on the electrode (1) according to one example of the present application is sufficient if the Vp/V ratio and the depth (D)/breadth (L) ratio according to the breadth (L) satisfy the above-mentioned ranges, and the width is not particularly limited, unless it deviates from the active material layer (20). For example, referring to Figure 3, the electrode (1) according to one example of the present application may be provided with an intaglio shape (21b) having a breadth L having a width smaller than the width (W) of the active material layer (20), a width W', and a depth D. In addition, the external shape of the intaglio shape (21b) is not particularly limited, and it is sufficient if the Vp/V ratio and the depth (D)/breadth (L) ratio according to the breadth (L) satisfy the above-described ranges. For example, the external shape of the intaglio shape (21b) may be a tetrahedron, a cuboid, a semicylinder, and other polygonal bodies.

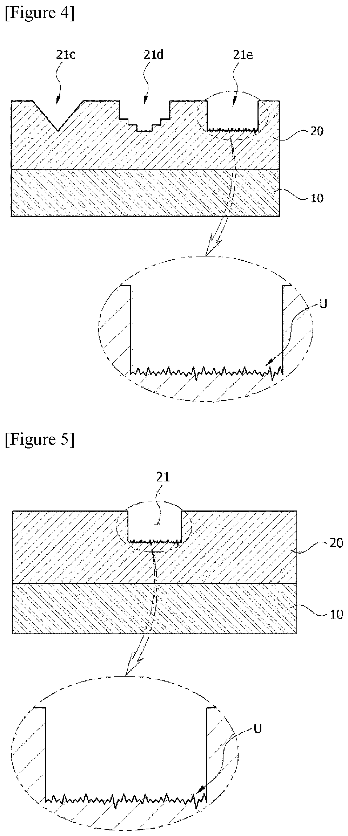

In the electrode (1) according to one example of the present application, a single or a plurality of intaglio shapes (21) may be formed on the surface of the active material layer (20). Referring to Figure 2, a single intaglio shape (21) may be formed on the surface of the active material layer (20). Also, referring to Figure 4, a plurality of intaglio shapes (21) may be formed on the surface of the active material layer (20). When a plurality of intaglio shapes (21) is formed on the surface of the active material layer (20), each intaglio shape (21) may have an independent shape (external or internal). In addition, they may be formed in the same manner or may be formed in different manners.

Also, when a plurality of intaglio shapes (21) formed on the electrode (1) according to one example of the present application is formed, they may be formed to cross each other or may be formed not to cross each other. In addition, in the plurality of intaglio shapes (21), the spacing between adjacent intaglio shapes (21) may be 10 $\mu$m or more, 50 $\mu$m or more, 100 $\mu$m or more, 105 $\mu$m or more, 110 $\mu$m or more, 115 $\mu$m or more, 120 $\mu$m or more, 125 $\mu$m or more, 130 $\mu$m or more, 135 $\mu$m or more, 140 $\mu$m or more, 145 $\mu$m or more, 150 $\mu$m or more, 155 $\mu$m or more, or 160 $\mu$m or more, and in another example, it may be 200 $\mu$m or less, 195 $\mu$m or less, 190 $\mu$m or less, 185 $\mu$m or less,

180 μm or less, 175 μm or less, or 170 μm or less. The spacing between the plurality of intaglio shapes (21) may be within a range formed by appropriately selecting the above-described upper and lower limits, and when this is satisfied, it is possible to improve impregnability of the electrolyte to the active material layer (20) while preventing storage capability deterioration of the active material. In the plurality of intaglio shapes (21), the spacing between adjacent intaglio shapes (21) may mean a shortest distance between facing outermost lines, as in the spacing (S) shown in Figure 3.

In the electrode (1) according to one example of the present application, when a plurality of intaglio shapes (21) is formed on the surface of the active material layer (20), the Vp in Equation 1 above may mean the total volume of the plurality of intaglio shapes (21).

When the ratio (Vp/V) of the total volume (Vp) of a plurality of intaglio shapes (21) to the volume (V) of the active material layer (20) satisfies Equation 1 as described above at the time of forming the intaglio shapes (21) on the surface of the active material layer (20), it is possible to improve the impregnability of the electrolyte to the active material layer (20), whereby it may be capable of performance improvement such as lifespan increase and resistance reduction of the battery.

The internal shape of the intaglio shape (21) in the electrode (1) according to one example of the present application is not particularly limited. Figure 4 is a cross-sectional diagram showing an example of an internal shape of the intaglio shape (21), which is only an example and is not limited thereto. For example, referring to Figure 4, there are an intaglio shape (21c) having a shape that becomes narrower toward the inside, an intaglio shape (21d) having steps, and an intaglio shape (21e) in which irregularities (U) are formed.

The intaglio shape (21) of the electrode (1) according to one example of the present application may have one or more steps therein. The term step, as used in the present application, may mean a height difference between the first surface and the second surface. Specifically, the intaglio shape (21) may have a stepped structure while having two or more steps inside, as in the intaglio shape (21d) of Figure 4. As such, if the steps are formed inside the intaglio shape (21), the surface area can be increased, so that the impregnability of the electrolyte to the active material layer (20) can be improved.

In addition, the intaglio shape (21) of the electrode (1) according to one example of the present application may have irregularities (U) on the inner bottom surface. Specifically, as in the intaglio shape (21e) of Figure 4, irregularities (U) having a predetermined pattern may be formed on the inner bottom surface, and irregular irregularities (U) may be formed. As such, when the irregularities (U) are formed on the inner bottom surface of the intaglio shape (21), the surface area can be increased, so that the impregnability of the electrolyte to the active material layer (20) can be improved.

The ratio (D/T) of the depth (D) of the intaglio shape (21) formed on the electrode (1) according to one example of the present application to the thickness (T) of the active material layer (20) may be 0.1 or more, 0.11 or more, 0.12 or more, 0.13 or more, 0.14 or more, 0.15 or more, 0.16 or more, 0.17 or more, 0.18 or more, 0.19 or more, or 0.2 or more, and in another example, the ratio (D/T) of the depth (D) of the intaglio shape (21) to the thickness of the active material layer (20) may be 0.6 or less, 0.59 or less, 0.58 or less, 0.57 or less, 0.56 or less, 0.55 or less, 0.54 or less, 0.53 or less, 0.52 or less, 0.51 or less, or 0.5 or less. The ratio (D/T) of the depth (D) of the intaglio shape (21) to the thickness (T) of the active material layer (20) may be within a range formed by appropriately selecting the above-described upper and lower limits.

Here, the thickness (T) of the active material layer (20) means the thickness of the active material layer (20), assuming that the intaglio shape (21) is not formed. The thickness of the active material layer (20) used in the present application may mean a value thereof if it is constant in the measurement range, and may mean an average thickness if it is not constant in the measurement range. Specifically, with respect to the active material layer (20) formed on an arbitrary plane viewed laterally within the measurement range, a vertical distance from a point on the plane to the surface of the active material layer (20) may be referred to as a thickness. Here, if the vertical distances are constant within the measurement range, the distance itself becomes the thickness of the active material layer (20), and if the vertical distances are different within the measurement range, the average thickness becomes the thickness of the active material layer (20). In addition, the line of the portion where the plane and the active material layer (20) are in contact with each other is divided into 10 equal divisions at regular intervals in the measurement range, and the respective points formed by 10 equal divisions are set on the line, where the average thickness may be an average of the vertical distances of the remaining points except for the points at both ends. Here, the thickness of the active material layer (20) has been described, but the thicknesses of other components may be described as above, unless otherwise specified.

The term constant, as used in the present application, may mean completely the same level, or may also mean substantially the same level with a predetermined error (difference within 5%). The predetermined error may mean a percentage (%) after dividing an absolute value of a value obtained by subtracting a specific measurement value from an average value by the average value.

When the intaglio shape (21) has the depth (D) relative to the thickness (T) of the active material layer (20) within the above-described range, it is possible to improve the impregnability of the electrolyte while preventing energy density deterioration of the battery.

In the present application, for objects using length units (for example, thickness, depth, breadth, height, and width, etc., and even if not in these examples, the use of length unit may correspond to these objects), the measurement may be performed using steel rulers or vernier calipers, and the like, or the measurement may be performed using precision mechanical devices.

The intaglio shape (21) formed on the electrode (1) according to one example of the present application may be formed by laser irradiation. The intaglio shape (21) may be formed by forming the active material layer (20) on at least one side of the current collector (10), and performing laser irradiation on the surface of the active material layer (20).

The laser irradiation may form an intaglio shape (21) on the electrode (1) according to one example of the present application by adjusting a beam size of the laser. Here, the beam size of the laser may be changed through the laser optics and focusing position changes. The change of the beam size through the optics may be performed through the magnification of the collimating lens, which makes the beam un-spread, and the magnification of the f-theta lens, which is designed so that the beam passing through the laser scanner is focused on the same plane. In addition, it may be performed by appropriately adjusting an in-focus surface or an out-focus surface of the laser beam.

Also, the size of the laser beam may change according to the wavelength or power. The wavelength of the laser beam may be, for example, 300 to 2,000 nm, and specifically, a wide range of wavelengths, including 1.06 $\mu$m, 532 nm, 355 nm, 266 nm, and 248 nm, and the like, may be selected. In addition, the power of the laser beam may be about 500 W, which is not particularly limited.

For the laser irradiation, IR laser, excimer laser, YAG laser, carbon dioxide laser, and the like may be used, but if it is used in the art, it may be used without particular limitation.

In addition, the laser irradiation may use a gas medium or a solid-state medium, where the gas medium may be selected from He-Ne, carbon dioxide, Ar, and an excimer laser, and used, and the solid-state medium may be selected from Nd: YAG, Nd: YVO4, and ytterbium fiber, and used.

The electrode (1) according to one example of the present application may have a V (impregnation rate) according to the following Equation 2 of $1.5\pi$ mm$^2$/s (sec) or more, $1.525\pi$ mm$^2$/s or more, $1.55\pi$ mm$^2$/s or more, $1.575\pi$ mm$^2$/s or more, $1.6\pi$ mm$^2$/s or more, $1.625\pi$ mm$^2$/s or more, $1.65\pi$ mm$^2$/s or more, $1.675\pi$ mm$^2$/s or more, $1.7\pi$ mm$^2$/s or more, $1.725\pi$ mm$^2$/s or more, $1.75\pi$ mm$^2$/s or more s or more, $1.775\pi$ mm$^2$/s or more, $1.8\pi$ mm$^2$/s or more, $1.825\pi$ mm$^2$/s or more, $1.85\pi$ mm$^2$/s or more, $1.875\pi$ mm$^2$/s or more, $1.9\pi$ mm$^2$/s or more, $1.925\pi$ mm$^2$/s or more or more, $1.95\pi$ mm$^2$/s or more, $1.975\pi$ mm$^2$/s or more, or $2\pi$ mm$^2$/s or more. In another example, the electrode (1) according to one example of the present application may have a V according to the following Equation 2 of $9.5\pi$ mm$^2$/s or less, $9.25\pi$ mm$^2$/s or less, $9\pi$ mm$^2$/s or less, $8.75\pi$ mm$^2$/s or less, $8.5\pi$ mm$^2$/s or less, $8.25\pi$ mm$^2$/s or less, $8\pi$ mm$^2$/s or less, or $7.75\pi$ mm$^2$/s or less. The V of the electrode (1) may be within a range formed by appropriately selecting the above-described upper and lower limits.

$$[\text{Equation 2}]$$

$$V = S_p/t_p$$

In Equation 2, $S_p$ is the area of the impregnated region of propylene carbonate (PC) confirmed by dropping 1 $\mu$l of the propylene carbonate (PC) on the intaglio shape of the electrode at 25°C, and $t_p$ is the time taken for impregnation after the dropping. Specifically, the impregnation rate, $S_p$, and $t_p$ may be obtained according to a method for measuring physical properties to be described below.

The impregnated region means a wetting region in the form of a plane observed in the direction of the dropped surface from the point where the propylene carbonate (PC) is dropped. Specifically, referring to Figure 2, a planar shape appears when observed in the direction of the surface dropped on the intaglio shape (21) at the point where the propylene carbonate (PC) is dropped, and the impregnated region may mean the wetting region of the propylene carbonate in the planar shape.

In addition, the shape of the impregnated region may vary, and for example, may be a circle, an ellipse, or a polygon with some curves, and the like.

The $t_p$ is the time until the impregnation is completed while maintaining the temperature after dropping, where the completion time of the impregnation may be the time that the propylene carbonate (PC) is wetted to the extent that it does not come off on the hands when the part where the propylene carbonate (PC) is dropped is touched by the hand.

In addition, the dropping has been performed with respect to the central point in the breadth direction of the intaglio shape (21), which may be performed by naturally dropping propylene carbonate (PC) using a dropper at a height about 3 to 5 cm or so away from the side on which the propylene carbonate (PC) is dropped.

When the impregnation rate (V) according to Equation 2 of the electrode (1) according to one example of the present application is in the above range, it is possible to improve the impregnability of the electrolyte, whereby it is possible to improve the performance in a range without impairing the safety of the battery.

The electrode (1) according to one example of the present application may have an $S_p$ (area of the impregnated region) in Equation 2 above of less than 60 $\pi$ mm$^2$, $59\pi$ mm$^2$ or less, $58\pi$ mm$^2$ or less, $57\pi$ mm$^2$ or less, $56\pi$ mm$^2$ or less, 55 mm$^2$ or less, or $54\pi$ mm$^2$ or less. In addition, in another example, the electrode (1) according to one example of the present application may have an Sp in Equation 2 above of $10\pi$ mm$^2$ or more, $12\pi$ mm$^2$ or more, $14\pi$ mm$^2$ or more, $16\pi$ mm$^2$ or more, $18\pi$ mm$^2$ or more, $20\pi$ mm$^2$ or more, $22\pi$ mm$^2$ or more, $24\pi$ mm$^2$ or more, $26\pi$ mm$^2$ or more, $28\pi$ mm$^2$ or more, $30\pi$ mm$^2$ or more, $32\pi$ mm$^2$ or more, $34\pi$ mm$^2$ or more, $36\pi$ mm$^2$ or more, $38\pi$ mm$^2$ or more, or $40\pi$ mm$^2$ or more. The $S_p$ of the electrode (1) may be within a range formed by appropriately selecting the upper and lower limits as described above.

The electrode (1) according to one example of the present application may have a $t_p$ (time required until the impregnation is completed after dropping, or impregnation time) in Equation 2 above of 25 seconds or less, 24 seconds or less, 23 seconds or less, 22 seconds or less, 21 seconds or less, or 20 seconds or less, and in another example, the $t_p$ may be 1 second or more, 5 seconds or more, 7 seconds or more, 9 seconds or more, or 10 seconds or more. The tp of the electrode (1) may be within a range formed by appropriately selecting the upper and lower limits as described above. In addition, the impregnation time may be one measured in an environment of normal pressure and normal humidity (about 40 to 60 RH%) and a place where there is no wind.

When the electrode (1) according to one example of the present application satisfies the impregnation rate (V) according to Equation 2 above within the above-described range and simultaneously the $S_p$ and $t_p$ are in the above range, it is possible to improve the impregnability of the electrolyte, whereby it is possible to improve the performance in a range without impairing the safety of the battery.

In the electrode (1) according to one example of the present application, the impregnated region of the propylene carbonate confirmed by dropping 1 $\mu$l of propylene carbonate (PC) on the intaglio shape of the electrode at 25°C has an elliptical shape, where the ratio ($L_{maj}/L_{min}$) of the major axis ($L_{maj}$) and the minor axis ($L_{min}$) in the elliptical shape may be more than 1, 1.1 or more, 1.2 or more, 1.3 or more, 1.4 or more, or 1.5 or more, and in another example, the ratio ($L_{maj}/L_{min}$) may be 8 or less, 7.75 or less, 7.5 or less, 7.25 or less, 7 or less, 6.75 or less, 6.5 or less, 6.25 or less, or 6 or less. The ratio ($L_{maj}/L_{min}$) of the major axis ($L_{maj}$) and the minor axis ($L_{min}$) in the impregnated region, which is an elliptical shape, may be within a range formed by appropriately selecting the upper and lower limits as described above.

When the electrode (1) according to one example of the present application satisfies the impregnation rate (V) according to Equation 2 above within the above-mentioned range and simultaneously satisfies the ratio ($L_{maj}/L_{min}$) of the major axis ($L_{maj}$) and the minor axis ($L_{min}$) in the impregnated region, which is the elliptical shape, within the above-mentioned range, the lithium precipitation can be prevented and excellent battery lifespan can be ensured.

The method for manufacturing the electrode (1) according to one example of the present application may comprise a step of forming an intaglio shape (21) on an active material layer (20) formed on at least one side of the current collector (10). The method for manufacturing the electrode (1) according to one example of the present application may refer to the features of the electrode (1) according to one example of the present application as described above.

Specifically, the method for manufacturing the electrode (1) according to one example of the present application may comprise a step of coating a slurry for forming an active material layer capable of forming the active material layer (20) on at least one side of the current collector (10).

Here, as the current collector (10), a positive electrode current collector or a negative electrode current collector may be used, as described above, and the examples thereof are the same as described above. In addition, various methods such as slot die coating, slide coating, and curtain coating may be applied to the method of applying the slurry for forming the active material layer.

Also, the slurry for forming the active material layer may comprise an electrode active material and a binder. The electrode active material and the binder are the same as described above, and the content may be based on the solid content. In addition, the slurry for forming the active material layer may further comprise a conductive material, and may further comprise a solvent if necessary. The solvent is not particularly limited as long as it is used in the art, and for example, water, isopropyl alcohol, N-methylpyrrolidone (NMP) and acetone, and the like may be used.

The method for manufacturing the electrode (1) according to one example of the present application may comprise a step of drying the slurry for forming an active material layer coated on at least one side of the current collector (10). The coated slurry for forming the active material layer may be dried through a drying process, and if it contains a solvent, the solvent may be removed. At this time, the drying temperature is not particularly limited, but may be in the range of about 70 to 200 °C.

The method for manufacturing the electrode (1) according to one example of the present application may comprise a step of rolling after the drying step. Through the rolling process, the capacity density of the active material can be increased, and the adhesion force between the current collector (10) and the active material layer (20) can be increased. In addition, the rolling process may be a process of compressing the dried slurry with a rolling member, and as the rolling member, a rolling roller or a rolling jig may be used.

The pressure applied in the rolling process may be appropriately adjusted in the range of 0.1 MPa to 90 MPa, or 0.1 MPa to 50 MPa, or 0.1 MPa to 30 MPa, or 0.1 MPa to 10 MPa. In addition, the rolling process may be performed by a roll press, where the speed of the roll press may be 20 m/min to 60 m/min.

In the method for manufacturing the electrode (1) according to one example of the present application, the active material layer (20) may be formed by performing at least one or more of the above-described steps. In addition, the method for manufacturing the electrode (1) may comprise a step of forming an intaglio shape (21). The intaglio shape (21) may be formed to have a predetermined depth from the surface of the formed active material layer (20). Here, the intaglio shape (21) may be formed using the laser irradiation, as described above.

When the laser irradiation is used, the pattern can be accurately and precisely implemented, and the energy is effectively irradiated to a narrow region, so that no thermal damage is caused to the active material layer (20). Since the content related to the laser irradiation is the same as described above, it will be omitted.

The electrode (1) according to one example of the present application may be a positive electrode or a negative electrode.

Also, the present application may provide an electrode assembly comprising the electrode (1). The electrode assembly may comprise a positive electrode, a negative electrode, and a separator, and specifically, may comprise a positive electrode, a negative electrode positioned to face the positive electrode, and a separator and an electrolyte interposed between the positive electrode and the negative electrode. In addition, the positive electrode or the negative electrode may be an electrode according to one example of the present application.

The separator separates the negative electrode and the positive electrode and provides moving passages for lithium ions, where any separator commonly used in the art may be used without particular limitation, and in particular, it is preferable that it has excellent electrolyte moisture content capability while having low resistance to ion movement of the electrolyte. Specifically, a porous polymer film, for example, a porous polymer film made of a polyolefin-based polymer such as an ethylene polymer, a propylene polymer, an ethylene/butene copolymer, an ethylene/hexene copolymer, and an ethylene/methacrylate copolymer, or a laminate structure of two or more layers thereof may be used. In addition, a conventional porous nonwoven fabric, for example, a nonwoven fabric made of high-melting point glass fiber, polyethylene terephthalate fiber, or the like may also be used. Furthermore, in order to secure heat resistance or mechanical strength, a coated separator containing a ceramic component or a polymer material may also be used, which may optionally be used in a single-layer or multi-layer structure.

As the electrolyte, an organic liquid electrolyte, an inorganic liquid electrolyte, a gel-type polymer electrolyte, a molten-type inorganic electrolyte, and the like generally used in the art may be used, but is not limited thereto. Specifically, the electrolyte may comprise an organic solvent and a lithium salt.

The organic solvent may be used without particular limitation as long as it can serve as a medium through which ions involved in the electrochemical reaction of the battery can move. Specifically, as the organic solvent, ester-based solvents such as methyl acetate, ethyl acetate, $\gamma$-butyrolactone, or $\varepsilon$-caprolactone; ether-based solvents such as dibutyl ether or tetrahydrofuran; ketone-based solvents such as cyclohexanone; aromatic hydrocarbon-based solvents such as benzene or fluorobenzene; carbonate-based solvents such as dimethylcarbonate (DMC), diethylcarbonate (DEC), methylethylcarbonate (MEC), ethylmethylcarbonate (EMC), ethylene carbonate (EC), or propylene carbonate (PC); alcohol-based solvents such as ethyl alcohol or isopropyl alcohol; nitriles such as R-CN (R is a linear, branched, or cyclic hydrocarbon group with 2 to 20 carbon atoms, which may contain a double bond aromatic ring or an ether bond); amides such as dimethylformamide; dioxolanes such as 1,3-dioxolane; or sulfolanes may be used. Among these, a carbonate-based solvent is preferable, and a mixture of a cyclic carbonate (for example, ethylene carbonate or propylene carbonate, etc.) having high ionic conductivity and high dielectric constant capable of increasing the charging/discharging performance of the battery, and a low-viscosity linear carbonate-based compound (for example, ethyl methyl carbonate, dimethyl carbonate or diethyl carbonate, etc.) is more preferable. In this case, when the cyclic carbonate and the chain carbonate are mixed in a volume ratio of about 1:1 to about 1:9, and used, the electrolyte may exhibit excellent performance.

The lithium salt may be used without particular limitation as long as it is a compound capable of providing lithium ions used in a lithium secondary battery. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, or $LiB(C_2O_4)_2$, and the like may be used. The concentration of the lithium salt is preferably used within a range of 0.1 to 2.0M. When the concentration of the lithium salt is included in the above range, the electrolyte has appropriate conductivity and viscosity, so that it is possible to exhibit excellent electrolyte performance, and lithium ions may move effectively.

In addition to the electrolyte components, the electrolyte may also further comprise, for example, one or more additives of haloalkylene carbonate-based compounds such as difluoroethylene carbonate, pyridine, triethyl phosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol or aluminum trichloride, and the like. At this time, the additive may be included in an amount of 0.1 wt% to 5 wt% relative to the total weight of the electrolyte.

Also, the present application may provide a secondary battery comprising the electrode assembly. Specifically, the secondary battery may be a lithium-ion battery.

In addition, the secondary battery may be applied to a portable device such as a mobile phone, a notebook computer, a digital camera, and an electric vehicle field such as a hybrid electric vehicle (HEV).

**Advantageous Effects**

The electrode according to the present application and the method for manufacturing the same can improve the impregnability of the electrolyte, thereby improving the performance in a range without impairing the safety of the battery.

Also, the electrode according to the present application and the method for manufacturing the same can improve the performance, such as lifespan increase of the battery by adjusting the breadth and depth of the intaglio shape.

In addition, the electrode according to the present application and the method for manufacturing the same can improve the impregnability of the electrolyte by increasing the surface area by an intaglio shape having an appropriate breadth, and reduce the resistance of the electrode by reducing the thickness of the electrode.

**Description of Drawings**

Figure 1 is a cross-sectional diagram illustrating an example of an electrode (1) according to one example of the present application.

Figures 2 and 3 are perspective diagrams of an electrode (1) according to one example of the present application.

Figures 4 and 5 are cross-sectional diagrams illustrating examples of internal shapes of intaglio shapes (21) according to one example of the present application.

Figure 6 shows an example in which an intaglio shape (21) according to one example of the present application is scanned with a measuring device.

Figure 7 shows the remaining life capacities of the mono-cells prepared in Examples and Comparative Examples.

**Best Mode**

Hereinafter, the present invention will be described by way of examples, but the scope of the present invention is not limited by the contents presented below.

Example 1

(1) Preparation of electrode

After coating a negative electrode active material composition (slurry) on the entire one side of a copper foil with a thickness of 8 $\mu$m, a negative electrode was prepared through drying and rolling processes.

The negative electrode active material composition was prepared by mixing a negative active material (mixed in a weight ratio of artificial graphite: natural graphite = 3:7, A), a conductive material (Super C65, B), styrene-butadiene rubber (SBR, C) and carboxymethyl cellulose (CMC, D) in a weight ratio of 96:1:2:1 (A: B: C: D), and dispersing the mixture in a solvent (water). The SBR has a solubility parameter of about 16.9 MPa$^{1/2}$ or so, and such a solubility parameter is a value described in the literature (Yanlong Luo et al., 2017, J. Phys. Chem. C 2017, 121, 10163-10173, DOI: 10.1021/acs.jpcc. 7b01583).

The negative active material composition was coated on the copper foil by a gap coating method, dried at about 230°C for 90 seconds or so, and then rolled to form an active material layer (20) with a thickness of about 90 $\mu$m or so.

Subsequently, an intaglio shape (21) being in a line form as in Figure 5 and having irregularities (U) on the inner bottom surface was formed on the surface of the active material layer (20) using a 500 W nano second pulse laser (fiber). The breadth (L) of the line form was about 500 $\mu$m or so, and the depth (D) was about 10 $\mu$m or so.

**(2) Manufacture of mono-cell**

An electrode assembly was manufactured by interposing a separator between a positive electrode and the prepared negative electrode, which was embedded in a case. Subsequently, an electrolyte was injected into the case to manufacture a mono-cell. As the electrolyte, a lithium non-aqueous electrolyte containing 1M lithium salt (LiPF$_6$), wherein ethyl carbonate (EC) and ethylmethyl carbonate (EMC) were mixed in a volume ratio of 3:7 (EC: EMC), was used. After injecting the electrolyte, it was sealed to manufacture the mono-cell.

**Example 2**

A negative electrode and a mon-ocell were manufactured in the same manner as in Example 1, except that the breadth (L) of the intaglio shape (21) was about 500 μm and the depth (D) was 30 μm.

**Example 3**

A negative electrode and a mono-cell were manufactured in the same manner as in Example 1, except that the intaglio shape (21) was formed such that the breadth (L) was about 500 μm and the depth (D) was about 50 μm.

**Example 4**

A negative electrode and a mono-cell were manufactured in the same manner as in Example 1, except that the intaglio shape (21) was formed such that the breadth (L) was about 1,000 μm and the depth (D) was formed to be about 10 μm.

**Comparative Example 1**

A negative electrode and a mono-cell were manufactured in the same manner as in Example 1, except that an intaglio shape was not formed.

**Comparative Example 2**

A negative electrode and a mono-cell were manufactured in the same manner as in Example 1, except that the intaglio shape (21) was formed such that the breadth (L) was about 500 μm and the depth (D) was about 90 μm.

**Comparative Example 3**

A negative electrode and a mono-cell were manufactured in the same manner as in Example 1, except that the intaglio shape (21) was formed such that the breadth (L) was about 1,000 μm and the depth (D) was about 30 μm.

**Comparative Example 4**

A negative electrode and a mono-cell were manufactured in the same manner as in Example 1, except that the intaglio shape (21) was formed such that the breadth (L) was about 1,000 μm and the depth (D) was about 50 μm.

**Comparative Example 5**

A negative electrode and a mono-cell were manufactured in the same manner as in Example 1, except that the intaglio shape (21) was formed such that the breadth (L) was about 1,000 μm and the depth (D) was about 90 μm.

**Comparative Example 6**

A negative electrode and a mono-cell were manufactured in the same manner as in Example 1, except that the intaglio shape (21) was formed such that the breadth (L) was about 90 μm and the depth (D) was about 55 μm.

**Comparative Example 7**

A negative electrode and a mono-cell were manufactured in the same manner as in Example 1, except that the intaglio shape (21) was formed such that the breadth (L) was about 2,500 μm and the depth (D) was about 2 μm.

The breadth (L), and depth (D) of each intaglio shape (21) in Examples and Comparative Examples, and the ratio (Vp/V) of the volume (Vp) of the intaglio shape to the volume (V) of the active material layer were each confirmed and summarized in Table 1 below.

Here, the breadth (L), and depth (D) of the intaglio shape (21), and the volume ratio (Vp/V) were measured using a laser microscope.

Here, as the laser microscope, KEYENCE's VR-3000 equipment was used, and the measurement was performed under a condition of a magnification $\times$ 40 in a high magnification camera with a scan range of 2 cm $\times$ 2 cm so that the intaglio shape (21) was included.

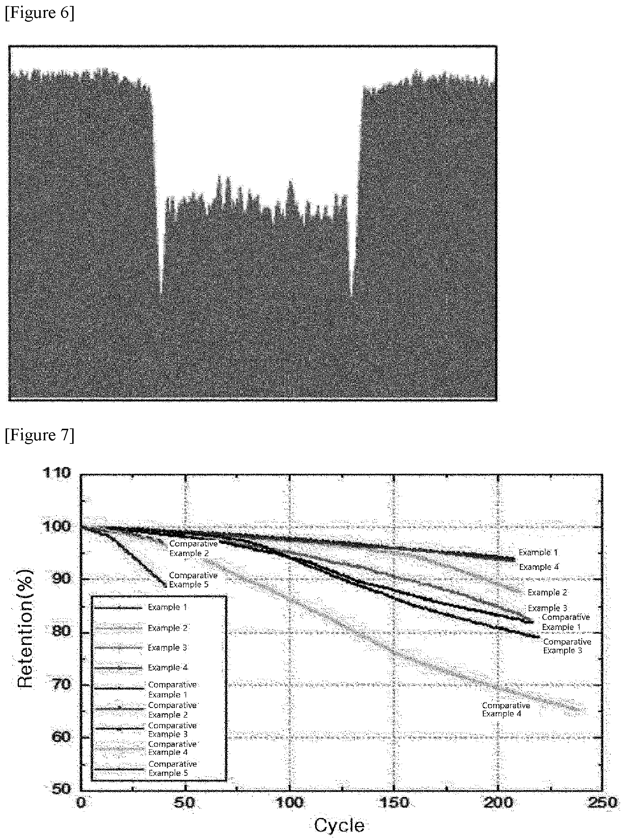

Figure 6 is an example of scanning the intaglio shape (21) with the measuring equipment, which can measure the breadth (L), and depth (D) of the intaglio shape (21), and the volume ratio (Vp/V).

[Table 1]

| Classification | | Breadth (L, $\mu$m) | Depth (D, $\mu$m) | D/L | 100$\times$Vp/V |
|---|---|---|---|---|---|
| Example | 1 | 500 | 10 | 0.02 | 0.109 |
| | 2 | 500 | 30 | 0.06 | 0.327 |
| | 3 | 500 | 50 | 0.1 | 0.545 |
| | 4 | 1,000 | 10 | 0.01 | 0.218 |
| Comparative Example | 1 | - | - | - | 0 |
| | 2 | 500 | 90 | 0.18 | 0.980 |
| | 3 | 1,000 | 30 | 0.03 | 0.654 |
| | 4 | 1,000 | 50 | 0.05 | 1.089 |
| | 5 | 1,000 | 90 | 0.09 | 1.961 |
| | 6 | 90 | 55 | 0.61 | 0.108 |
| | 7 | 2,500 | 2 | 0.0008 | 0.11 |

**Test Example 1. Impregnability**

The impregnability of each electrode in Examples and Comparative Examples was confirmed by evaluating the impregnation rate, the impregnation time, the area of the impregnated region, and the like.

The impregnability was evaluated in the following manner.

1 $\mu$l of propylene carbonate (PC) was dropped at room temperature (25°C) on the intaglio shape (21) of each electrode (1) in Examples or Comparative Examples, and the time (impregnation time) until the impregnation was completed while maintaining the temperature was measured. Here, the completion time of the impregnation was the time that the propylene carbonate (PC) was wetted to the extent that it did not come off on the hands when the part where the propylene carbonate (PC) was dropped was touched by the hand.

In addition, the dropping had been performed with respect to the central point in the breadth direction of the intaglio shape (21), which was performed by naturally dropping propylene carbonate (PC) using a dropper at a height about 4 cm or so away from the side on which the propylene carbonate (PC) was dropped. In the case of Comparative Example 1, since there was no intaglio shape, the dropping was performed on the surface of the active material layer.

Here, the impregnated regions after the impregnation completion were all formed in the elliptical shape, except for Comparative Example 1. Here, the impregnated region means a wetting region in the form of a plane observed in the direction of the dropped surface from the point where the propylene carbonate (PC) is dropped (see Figure 2). For this elliptical shape, the ratio ($L_{maj}/L_{min}$) of the major axis (major line, $L_{maj}$) and the minor axis (minor line, $L_{min}$) was measured (in the case of Comparative Example 1, the impregnated region was formed in a circular shape, and thus the ratio was shown to be 1).

The impregnation rate V was measured according to Equation 2 below.

$$[Equation\ 2]$$

$$V = S_p/t_p$$

In Equation 2, $S_p$ is the area of the impregnated region, and $t_p$ is the time taken for impregnation completion after the dropping.

The above contents were summarized in Table 2 below.

The major axis-to-minor axis ratio in Table 2 was evaluated after measuring the major axis and the minor axis (diameter in the case of a circle form) using a steel ruler, and the area of the impregnated region was evaluated by calculating the measured major axis and minor axis (diameter in the case of a circle form).

[Table 2]

| Classification | | | Impregnation time (sec) | Major axis-to-minor axis ratio ($L_{maj}/L_{min}$) | Area of impregnated region ($mm^2$) | Impregnation rate ($mm^2$/sec) |
|---|---|---|---|---|---|---|
| Example | | 1 | 20 | 1.6 | $40\pi$ | $2\pi$ |
| | | 2 | 10 | 3.25 | $52\pi$ | $5.2\pi$ |
| | | 3 | 7 | 6 | $54\pi$ | $7.71\pi$ |
| | | 4 | 19 | 1.6 | $40\pi$ | $2.11\pi$ |
| Comparative Example | | 1 | 30 | 1 | $36\pi$ | $1.2\pi$ |
| | | 2 | 5 | 6.67 | $60\pi$ | $12\pi$ |
| | | 3 | 7 | 4.25 | $68\pi$ | $9.71\pi$ |
| | | 4 | 5 | 7 | $63\pi$ | $12.6\pi$ |
| | | 5 | 4 | 7 | $63\pi$ | $15.75\pi$ |
| | | 6 | 28 | 12 | $40\pi$ | $1.42\pi$ |
| | | 7 | 29 | 1.1 | $36\pi$ | $1.2\pi$ |

From Tables 1 and 2, it can be confirmed in Examples 1 to 4, in which the ratio ($100\times$Vp/V) of the volume (Vp) of the intaglio shape to the volume (V) of the active material layer is within the range of 0.1 to 0.6, that the impregnation rate (V) in the impregnability evaluation is formed within the range of $1.5\pi$ $mm^2$/s to $9.5\pi$ $mm^2$/s. On the other hand, in the case of Comparative Example 1 without any intaglio shape, a slow impregnation rate was confirmed, and Comparative Examples 2 to 5 in which the ratio ($100\times$Vp/V) exceeded 0.6, an excessively fast impregnation rate (V) was confirmed, and the area of the impregnated region was also confirmed to be large.

Also, from Tables 1 and 2, it was confirmed that in the case of Comparative Example 6, in which the ratio ($100\times$Vp/V) was within the range of 0.1 to 0.6, but the breadth was narrower and the depth was deeper compared to Example 1, the major axis was significantly longer than the minor axis, and the impregnation rate (V) was rather low.

In addition, from Tables 1 and 2, it was confirmed that in the case of Comparative Example 7, in which the ratio ($100\times$Vp/V) was within the range of 0.1 to 0.6, but the breadth was longer and the depth was shallower compared to Example 1, the effect by the intaglio shape could not be obtained, and thus it had a slow impregnation rate.

**Test Example 2. Evaluation of lithium precipitation**

For the mono-cells of Examples and Comparative Examples, charging and discharging were performed to evaluate whether lithium was precipitated, and the results were shown in Table 3.

The charging and discharging conditions were changed as shown in Table 3 below, charging and discharging were performed in 7 cycles for each condition, and the results were confirmed. In Table 3 below, O denotes a case in which precipitation occurred, and X denotes a case in which precipitation did not occur.

[Table 3]

| Classification | | | 0.33C/0.33C (7 cycle) | 1C/0.33C (7 cycle) | 2C/0.33C (7 cycle) | 1C/1C (10 cycle) |
|---|---|---|---|---|---|---|
| Example | | 1 | X | X | X | X |
| | | 2 | X | X | X | X |
| | | 3 | X | X | X | X |
| | | 4 | X | X | X | X |

(continued)

| Classification | | 0.33C/0.33C (7 cycle) | 1C/0.33C (7 cycle) | 2C/0.33C (7 cycle) | 1C/1C (10 cycle) |
|---|---|---|---|---|---|
| Comparative Example | 1 | X | O | O | O |
| | 2 | X | X | O | X |
| | 3 | O | O | O | O |
| | 4 | O | O | O | O |
| | 5 | X | X | O | O |
| | 6 | X | O | O | O |
| | 7 | X | O | O | O |

From Table 3, in the case of Comparative Examples, lithium precipitation always occurred depending on the charging conditions. Therefore, these results show that the precipitation of lithium can be stably prevented when the intaglio shape is formed according to the contents of Examples of the present application.

**Test Example 3. Battery life evaluation**

For the mono-cells of Examples and Comparative Examples, charging and discharging were repeated at room temperature (at 25°C) under a condition of 0.33 C/0.5 C in one cycle, and the resulting remaining life capacity (retention capacity) was shown in Figure 7. From Figure 7, it can be confirmed that when the electrodes of Examples 1 to 4 are applied, the remaining life capacity retention rate according to one cycle is superior to that of Comparative Examples. Meanwhile, Comparative Examples 6 and 7 showed similar results to Comparative Example 1 upon the life evaluation.

[Explanation of Reference Numerals]

1: electrode 20: active material layer

10: current collector 21: intaglio shape

**Claims**

1. An electrode, comprising:

a current collector; and
an active material layer formed on at least one side of the current collector, the active material layer having an intaglio shape therein, and the intaglio shape has a breadth in a range of 100 $\mu$m to 2,000 $\mu$m, and the intaglio shape satisfies Equation 1 below:

$$[\text{Equation 1}]$$

$$0.1 \leq 100 \times \text{Vp/V} \leq 0.6$$

wherein, Vp is a volume of the intaglio shape, and V is a volume of the active material layer.

2. The electrode according to claim 1, wherein the breadth of the intaglio shape is in the range of 100 $\mu$m to 800 $\mu$m, and a ratio (D/L) of a depth (D) to the breadth (L) of the intaglio shape is in a range of 0.005 to 0.15.

3. The electrode according to claim 1, wherein the breadth of the intaglio shape is more than 800 $\mu$m, and a ratio (D/L) of a depth (D) to the breadth (L) of the intaglio shape is in a range of 0.005 to 0.025.

4. The electrode according to claim 1, wherein a single intaglio shape or a plurality of intaglio shapes are formed.

5. The electrode according to claim 1, wherein the active material layer comprises an electrode active material and a binder, wherein the binder having a solubility parameter in a range of 10 to 30 MPa$^{1/2}$.

6. The electrode according to claim 5, wherein a ratio of the electrode active material in the active material layer is 80 to 99 wt%, and the binder is included in the active material layer in an amount of 0.1 to 10 parts by weight relative to 100 parts by weight of the electrode active material.

7. The electrode according to claim 5, wherein the electrode active material comprises graphite.

8. The electrode according to claim 1, wherein a ratio (D/T) of a depth (D) of the intaglio shape to a thickness (T) of the active material layer is in a range of 0.1 to 0.6.

9. An electrode comprising:

a current collector; and
an active material layer formed on at least one side of the current collector, the active material layer having an intaglio shape therein, and an impregnation rate V of an electrolyte into the active material layer according to the following equation 2 is in a range of $1.5\pi$ mm$^2$/s to $9.5\pi$ mm$^2$/s:

[Equation 2]

$$V = S_p/t_p$$

wherein, $S_p$ is an area of an impregnated region of propylene carbonate (PC) confirmed by dropping 1 $\mu$l of the propylene carbonate (PC) on the intaglio shape at 25°C, and $t_p$ is a time taken for impregnation after the dropping.

10. The electrode according to claim 9, wherein $S_p$ in Equation 2 is less than $60\pi$ mm$^2$.

11. The electrode according to claim 9, wherein $t_p$ in Equation 2 is 25 seconds or less.

12. The electrode according to claim 9, wherein the impregnated region of the propylene carbonate (PC) has an elliptical shape, and a ratio ($L_{maj}/L_{min}$) of a major axis ($L_{maj}$) to a minor axis ($L_{min}$) in the elliptical shape is more than 1 to 8 or less.

13. A method for manufacturing an electrode, comprising:

a step of forming an intaglio shape on an active material layer formed on at least one side of a current collector, wherein the intaglio shape has a breadth in a range of 100 $\mu$m to 2,000 $\mu$m, and the intaglio shape satisfies Equation 1 below:

[Equation 1]

$$0.1 \leq 100 \times Vp/V \leq 0.6$$

wherein, Vp is a volume of the intaglio shape, and V is a volume of the active material layer.

14. The method according to claim 13, wherein the intaglio shape is formed by laser irradiation.

15. An electrode assembly comprising a positive electrode, a negative electrode, and a separator disposed between the positive electrode and the negative electrode, wherein the positive electrode or the negative electrode is the electrode of claim 1.

16. A secondary battery comprising the electrode assembly of claim 15.

[Figure 1]

[Figure 2]

[Figure 3]

[Figure 4]

21c   21d   21e

20

10

U

[Figure 5]

21

20

10

U

[Figure 6]

[Figure 7]

## INTERNATIONAL SEARCH REPORT

| International application No. |
|---|
| **PCT/KR2022/012778** |

**A. CLASSIFICATION OF SUBJECT MATTER**

**H01M 4/13**(2010.01)i; **H01M 4/133**(2010.01)i; **H01M 10/0525**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/13(2010.01); H01G 11/26(2013.01); H01M 10/05(2010.01); H01M 4/134(2010.01); H01M 4/139(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 (electrode), 음각 (grooves), 활물질 (active material), 폭 (width), 깊이 (depth), 프로필렌카보네이트 (propylene carbonate), 함침 (impregnation)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2013-0103361 A (DAIDO METAL CO., LTD.) 23 September 2013 (2013-09-23)<br>See abstract; claims 1 and 3; and figure 1. | 1-16 |
| Y | KR 10-2017-0094983 A (LG CHEM, LTD.) 22 August 2017 (2017-08-22)<br>See abstract; paragraphs [0025], [0051], [0061], [0105], [0114] and [0117]; and claims 1, 8 and 9. | 1-16 |
| Y | KR 10-2005-0012710 A (SONY CORPORATION) 02 February 2005 (2005-02-02)<br>See abstract; and claim 1. | 9-12 |
| A | KR 10-2020-0030835 A (KOREA INSTITUTE OF MACHINERY & MATERIALS) 23 March 2020 (2020-03-23)<br>See entire document. | 1-16 |
| A | KR 10-1876402 B1 (SK INNOVATION CO., LTD.) 09 July 2018 (2018-07-09)<br>See entire document. | 1-16 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 November 2022** | **02 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/012778**

| Patent document cited in search report | | | Publication date (day/month/year) | Patent family member(s) | | | Publication date (day/month/year) |
|---|---|---|---|---|---|---|---|
| KR | 10-2013-0103361 | A | 23 September 2013 | CN | 103310993 | A | 18 September 2013 |
| | | | | JP | 2013-187468 | A | 19 September 2013 |
| | | | | KR | 20-0476985 | Y1 | 23 April 2015 |
| | | | | KR | 20-2014-0005286 | U | 10 October 2014 |
| | | | | TW | 201347276 | A | 16 November 2013 |
| | | | | TW | M493163 | U | 01 January 2015 |
| | | | | US | 2013-0236782 | A1 | 12 September 2013 |
| KR | 10-2017-0094983 | A | 22 August 2017 | KR | 10-2168229 | B1 | 20 October 2020 |
| KR | 10-2005-0012710 | A | 02 February 2005 | CN | 1292502 | C | 27 December 2006 |
| | | | | CN | 1545742 | A | 10 November 2004 |
| | | | | EP | 1519431 | A1 | 30 March 2005 |
| | | | | JP | 2004-022507 | A | 22 January 2004 |
| | | | | KR | 10-1055158 | B1 | 08 August 2011 |
| | | | | TW | 200411969 | A | 01 July 2004 |
| | | | | TW | I233230 | B | 21 May 2005 |
| | | | | US | 2004-0185341 | A1 | 23 September 2004 |
| | | | | US | 7229713 | B2 | 12 June 2007 |
| | | | | WO | 04-001880 | A1 | 31 December 2003 |
| KR | 10-2020-0030835 | A | 23 March 2020 | KR | 10-2165952 | B1 | 14 October 2020 |
| KR | 10-1876402 | B1 | 09 July 2018 | KR | 10-2013-0085828 | A | 30 July 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210113140
- KR 1020220107196
- KR 1020160116969

**Non-patent literature cited in the description**

- **YANLONG LUO et al.** *J. Phys. Chem. C,* 2017, vol. 121, 10163-10173
- **YANLONG LUO et al.** *J. Phys. Chem. C 2017,* 2017, vol. 121, 10163-10173